Europäisches Patentamt

European Patent Office

Office européen des brevets

(19)

(11) Publication number: **0 025 254**
**B1**

(12)

# EUROPEAN PATENT SPECIFICATION

(45) Date of publication of patent specification: **26.09.84**

(51) Int. Cl.³: **H 04 M 1/274**

(21) Application number: **80300250.0**

(22) Date of filing: **28.01.80**

(54) A telephone set.

(30) Priority: **20.08.79 US 67758**

(43) Date of publication of application:
**18.03.81 Bulletin 81/11**

(45) Publication of the grant of the patent:
**26.09.84 Bulletin 84/39**

(84) Designated Contracting States:
**BE CH DE FR GB IT LU NL SE**

(56) References cited:
**US-A-2 995 726**
**US-A-4 164 630**

(73) Proprietor: **Chiou, Suchi**
**5th fl. No.15 Lane 180 Ho-Chiang Street**
**Taipei (TW)**

(72) Inventor: **Chiou, Suchi**
**5th fl. No.15 Lane 180 Ho-Chiang Street**
**Taipei (TW)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

This invention relates to a telephone set having an index device of usual telephone numbers.

The conventional electronic key telephone has the capability to memorize many telephone numbers. Said memory number is generally abbreviated to a two-digit number to represent its original number. However, if the usual numbers to be memorized have been increased, the digits may be increased to three-digit. For the user to memorize all the abbreviated numbers with regard to their corresponding telephone numbers will become difficult. An index device is thus used to record the relationship between the original telephone numbers and their abbreviated numbers. One may first search the abbreviated number from the index and then push a button to call out the desired telephone number. Said index may be directly provided on the telephone set to correspond the memorized telephone number with the specific button. Said index will occupy a space on the telephone set. Several index cards shall be overlapped to reduce their volume on the set. Several selectors should be further provided each corresponding to an index card. Whenever dialing the desired number, one should first open the specific selector to find out the specific index card and then search the desired number from that index card to call out said number. Those selectors are concentrated on the set to form a crowded and clumsy telephone set whose appearance will then be worsely affected.

US—A—2995726 and US—A—4164630 disclose index devices for respectively a data processing input unit and a telephone set which utilise overlapped index cards and a single slideable selector.

The conventional electronic key telephone has an automatic re-dial device so that the caller will automatically and repeatedly re-dial to the receiver in every preset time interval even though the receiver does not receive the phone call or the receiver's line is busy. If the caller temporarily leaves the phone and forgets to cancel the order of that automatic re-dial, the receiver will still receive the repeated re-dial even after he has once received it. The receiver will be troubled and embarrassed by the repeated phone rings. The caller's telephone fee may also be increased caused by those repeated calls.

The present inventor has found these defects and improved to disclose the present multi-purpose telephone set of micro-process.

The present invention generally provides a multi-purpose telephone set for automatic number calling in which a card selecting hook may be moved to search the position of classified index card having the desired telephone number and a sliding button may be depressed to open the covering plate of the index card to reveal the specific classified index card having the desired number. When depressing the sliding button, the contacts on x-axis of a memory address key board are connected simultaneously. One of a plurality of buttons beside the classified index card may then be depressed to connect the contacts on y-axis of the memory address key board. The desired telephone number on the specific address of the memory is thus picked up and dialled out by a number calling device in the telephone set. Means are provided for automatically re-initiating operation of the number calling device if the number called is not received and for cancelling the automatic operation of the calling device once a call has been received.

Another feature of the present invention is to provide a telephone set of micro-process having a circuit device which comprises a reed relay, a photo coupler and dummy load. This circuit device cancels the order of automatic re-dial. During calling, if the caller temporarily leaves the phone having an automatic re-dial means and forgets to cancel such an automatic re-dial order, the receiver would no longer be troubled by the repeated rings as the order has been canceled by the circuit device when the call is received and the polarity of the exchange line is alternated.

The telephone set of the present invention may be combined with a calculator, a clock, an alarm clock, a stop watch and other conventional means to form a multi-purpose telephone set of micro-process.

The invention will now be described in detail, with reference to accompanying drawings, in which,

Fig. 1 is the circuit block diagram of the present invention.

Fig. 2 is the illustration of the memory matrix of telephone numbers used with the present invention.

Fig. 3 is the illustration showing the contacts in x-axis and y-axis within the memory address key board used with the present invention.

Fig. 4 is the perspective drawing of the telephone set of the present invention.

Fig. 5 is the perspective drawing of the index card of telephone number from direction A of Fig. 4.

Fig. 6 is the partial sectional drawing of the telephone set of the present invention from direction B of Fig. 4.

Fig. 7 is the perspective drawing of the card selecting hook used in the present invention.

Fig. 8 is the perspective drawing of sliding button used in the present invention.

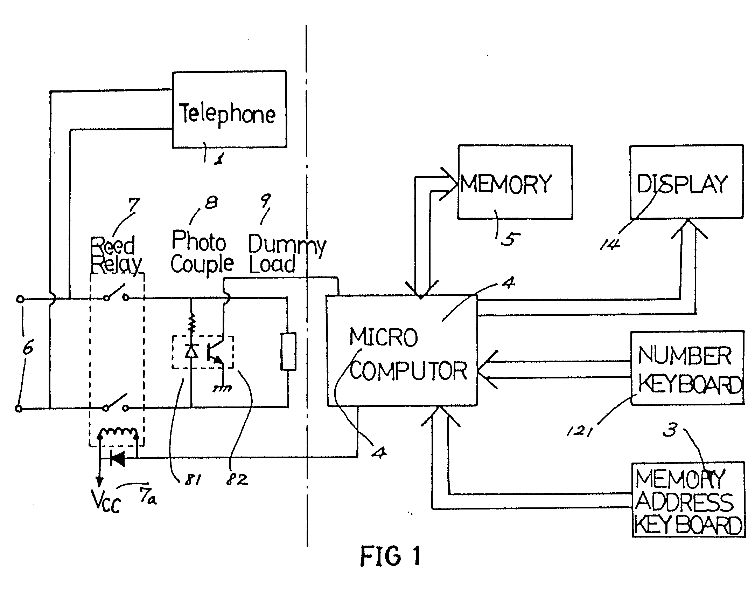

As shown in Fig. 1, the telephone number to be called may be input into micro-computer 4 by number key board 121. Said micro-computer may issue a dialing pulse or multi-frequency to let the reed relay 7 call out said telephone number. The input telephone number may also be stored in memory 5 of micro-computer 4 which awaits to be called out by next time.

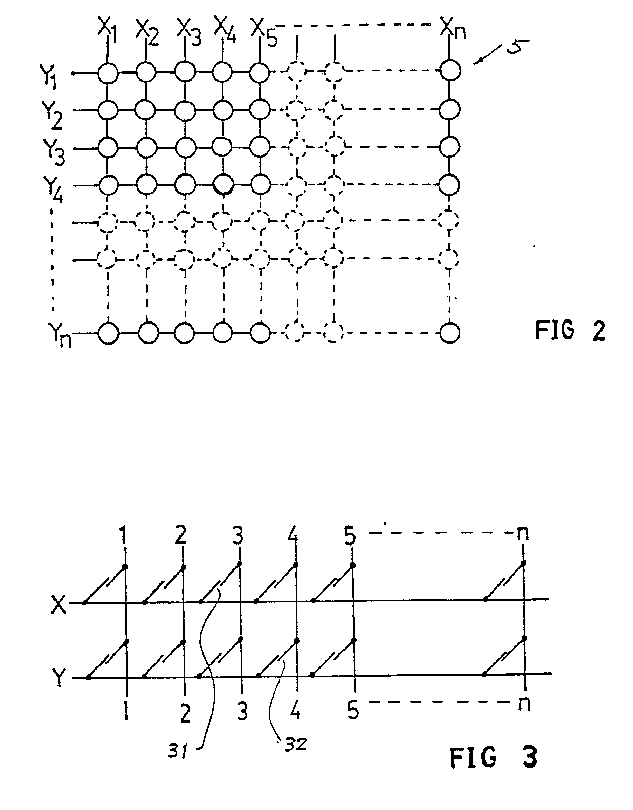

The telephone number stored in memory may occupy an address in memory 5 as shown in the matrix address of Fig. 2. The matrix address may be called out by memory address key board 3. For instance, first depress the button 31 on x-axis of Fig. 3 to contact x with 3 and then connect the fourth button on y-axis to contact y with 4. The memorized number at address $X_3Y_4$ will then be called out (Fig. 2). Said number is, in turn, called out through micro-computer 4 as shown in Fig. 1.

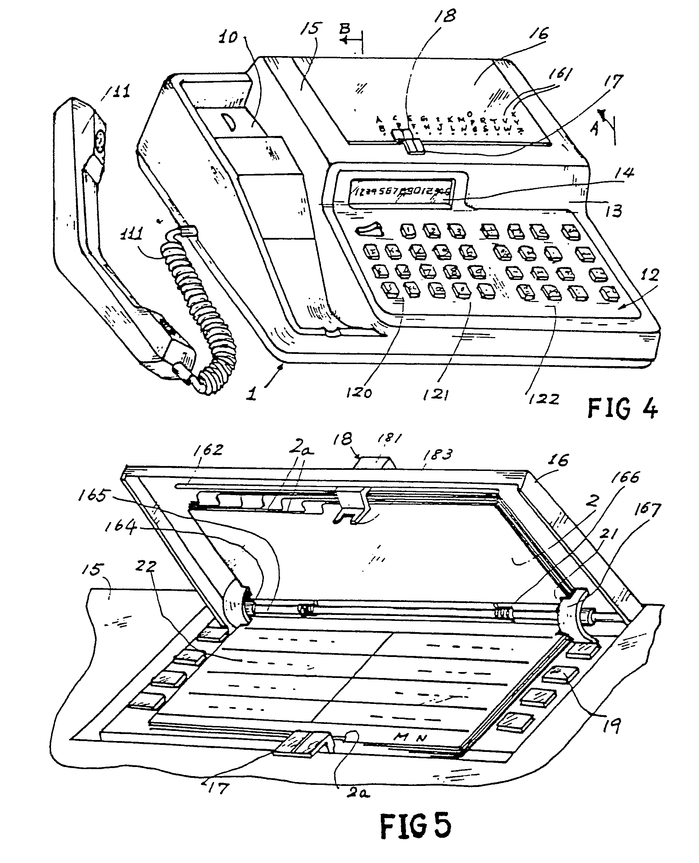

The appearance of the telephone set of the present invention is shown in Fig. 4. A U.S. Design Patent of the present telephone set has been filed on March 16, 1979 with a filing serial number of 021,260.

At left side of Fig. 4, a rest recess 10 is formed to lay down the hand set 11 which is connected to set 1 by cord 111. A key board 12 is positioned at right side of Fig. 4 in which the left portion serves as adjusting key board for clock, alarm clock or stop watch 120; the middle portion serves as telephone number key board 121 or as key board for calculator use and the right side serves for other functions such as: calculator and timing operations.

The middle portion of set 1 is inclined upwards to provide a display 14. A platform 15 is formed atop said set 1 and is slightly inclined to its rear side. A covering plate 16 is provided on said platform 15.

Said covering plate 16 as shown in Figs. 4, 5 and 6 is printed thereon with classification number or alphabet 161, such as: AB, CD, ... and XYZ. A slit 151 is provided on said platform 15 for engaging with the sliding button 17. Another slit 162 is provided on the covering plate 16 to engage with a card selecting hook 18.

The back portion of said covering plate 16 is bent to form an extension 163 which terminates with a slope 163a at its lowest end. Two shaft brackets 164 are extended under said plate 16 for pivotedly inserting a horizontal shaft 165 which is mounted on the frame of the present telephone set. Two springs 166 are jacketed onto said shaft 165.

A horizontal plate 152 is extended from and under said platform 15. At its left side, a slit 152a is provided to pass said sliding button 17. A card supporting plate 153 is horizontally connected to said plate 152. A slit 153a is provided on said plate 153 to pass the card selecting hook 18. The end of said plate 153 is inclined outwards and downwards to form two slope portions 153b for frictionally stopping the lower end 163a of said covering plate when opening said plate 16.

A spring bracket 153c is provided at the end of said supporting plate 153 to insert the lower end 166b of spring 166. Another end 166a of spring stops at said plate 16.

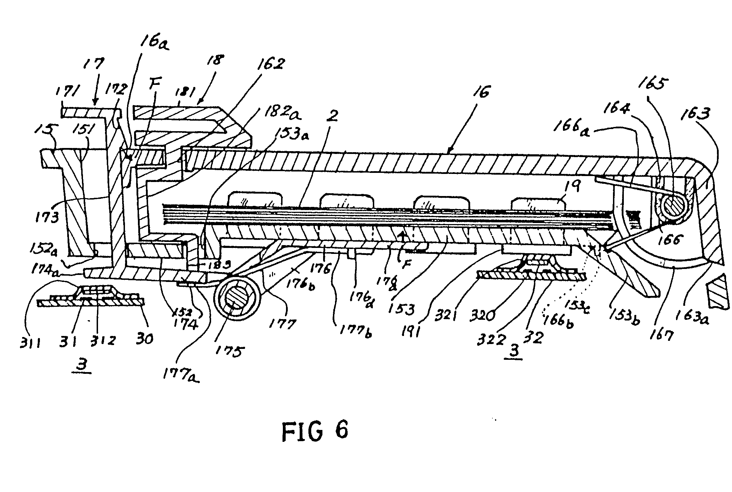

As shown in Figs. 5 and 6, several cards 2 are laid under the covering plate 16. Each card 2 is formed with two cutting holes 21 of both sides thereof. Two arch plates 167 on both sides of the plate 16 serve to engage with said holes 21 on said card 2. Said card 2 is printed with several horizontal lines and is divided with two columns by a central partition. Each line on one side (column) is printed with a telephone number and the name 22. A button 19 is provided aside each line number 22. Said button 19 is freely passing through said plate 153. Its lower extension 191 is floating on the elastic rubber 321. Each card 2 is also cut with a transverse recess 2a on its front edge. The length of each recess 2a is as increasing as the classification number subsequently proceeding. It means that the recess 2a on upper card is shorter than that of the lower card.

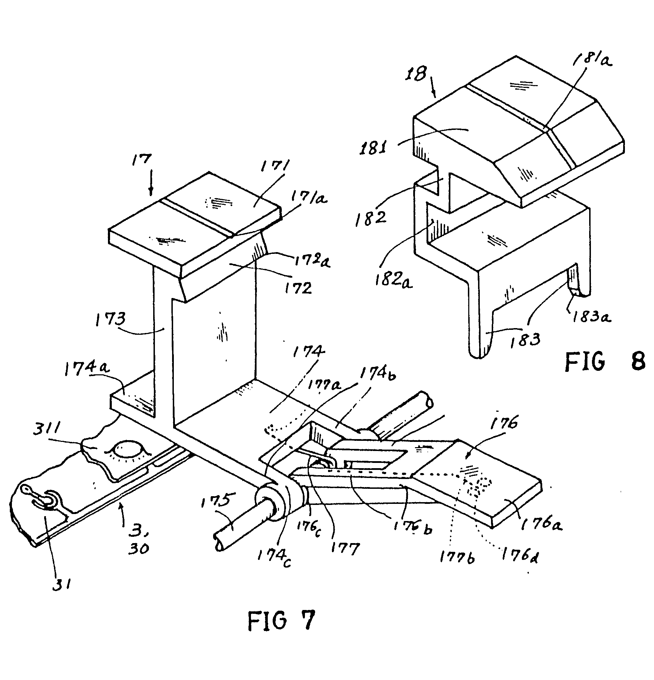

As shown in Figs. 7 and 6, said sliding button 17 comprises a surface plate 171 on which a central line 171a is provided to coincide with the central line 181a on the surface plate 181 of said card selecting hook 18 so as to coincide with the classification 161 of telephone numbers on the covering plate 16. Said button plate 171 is extended downwards to form a slope 172 and a hook 172a and then formed a vertical plate 173 which is finally connected with a horizontal plate 174 having one end of tongue extension 174a and another end of fork plate 174. Said fork plate 174 is extended with two arms 174b each terminating in a shaft bracket 174c for pivotedly inserting a shaft 175 which is mounted on the frame of telephone set. A sliding plate 176 which has an upper plate 176a movingly backing the bottom of said card supporting plate 153 is extended with two inclined arms 176b each terminating with a shaft bracket 176c for inserting said shaft 175.

A spring 177 is jacketed into said shaft 175 between two arms 176c. One end 177a of the spring is ended to back the horizontal plate 174. Another end 177b of spring 177 is fixed within two brackets 176d under plate 176a. The clamping force F as shown in Fig. 6 is exerted by said spring 177. One end of spring 177a will force the plate 174 and the hook 172a of said sliding button 17 upon the edge 16a of said covering plate 16. Another end 177b will pressurize the supporting plate 153 through the upper sliding plate 176a.

The card selecting hook 18 as shown in Fig. 8 comprises an upper surface plate 181 on which a central line 181a is provided to coincide with the classification number 161 of plate 16. Said plate is extended downwards to connect a vertical plate 182 and middle hook plate 182a and finally terminated with two vertical legs 183. The leg edge is formed with arch shape 183a for easily engaging into the horizontal plate 174 of said sliding button 17. The middle hook plate 182a may carry the index card 2 as shown in Fig. 6.

As shown in Figs. 7 and 6, a printed circuit board 30 is provided under the tongue exten-

sion 174a of said sliding button 17. Contacts 31 being provided on the board 30 are covered with elastic rubber 311 having inner conducting plate 312. At right side of Fig. 6, the button 19 is provided aside each telephone number 22. Another printed circuit board 32 is provided under those buttons 19. Said board 32 includes contacts 320 which are covered with elastic rubber 321 having inner conducting plate 322.

When using the present telephone set and trying to dial the number classified in card of "MN", the card selecting hook 18 should be moved to the classification 161 printing "MN" letters. The sliding button 17 which is engaged with said selecting hook 18 may be moved to the specific classification of "MN" along said shaft 175. By depressing said button 17, the lower tongue extension 174a will depress to conduct the contacts 31 of x-axis of the memory address in Fig. 3. Meanwhile, said button 17 is depressed to rotate anti-clockwise along shaft 175 so that its hook 172a would no longer obstruct the covering plate 16, 16a. Said covering plate 16 will then be opened by the action of spring 166 contained therein.

When moving the selecting hook 18 to the position "MN", the transverse recesses 2a on card "MN" and cards thereunder are lengthy enough to pass the hook plate 182a of said card selecting hook 18 so that said hook plate 182a would not carry and raise the index card "MN" and cards thereunder as opening the plate 16. The card "MN" is thus revealed. By depressing the button 19 aside telephone number 22, the contacts 320 of y-axis under button 19 will be conducted. The telephone number is then picked up from both x- and y-axis of the memory address in Fig. 3. The desired number will be called out through micro-computer 4.

By using the present invention, the usual telephone numbers may be searched and called faster, easily and conveniently. It may memorize more numbers than the conventional one. The false and confused calling or dialing found in common phones will be prevented. The compact and sophisticated construction makes the present invention more usable.

The circuit of the present invention is shown in Fig. 1 which comprises a telephone 1, a terminal from exchange line 6, a reed relay 7, a micro-computer 4, a memory part 5, a display 14, a number key board 121 and a memory address key board 3. The letter Vcc 7a means power source of direct circuit which is used to operate the present telephone set.

The present invention comprises an additional circuit which may cancel the order of automatic re-dial. Said additional circuit preferably comprises a photo coupler 8 and a dummy load 9. Said photo coupler 8 further comprises a light emission diode (LED) 81 and a photo transistor 82. Said LED 81 of said photo coupler 8 is connected in parallel with said dummy load 9 and is positioned after reed relay 7. Said photo transistor 82 is used to transmit a grounding signal to said micro-computer 4 as LED 81 being lit. Said dummy load 9 is used to substitute the load of the telephone circuit.

When the caller uses the phone having automatic re-dial to call, the circuit composed of reed relay 7, photo coupler 8 and dummy load 9 is conducted. If selecting the polarity of L1 as positive and that of L2 as negative, LED 81 of photo coupler 8 would not be lit. It is not lit whether it is dialed or not. If the receiver receives the phone call, the polarity of L1 and L2 will be alternated to change L1 from positive to negative and to change L2 from negative to positive. Said LED is effected by forward voltage of passing current to become lighted. Said photo transistor 82 is then conducted. The micro-computer 4 will thus receive a grounding signal so as to cancel the order of automatic re-dial. By such a means, the receiver would not be troubled as the repeated order of automatic re-dial have been canceled even if the caller does not cancel or forgets to cancel the order of automatic re-dial. The unnecessary telephone fee caused to the caller may also be saved.

## Claims

1. A multi-purpose telephone set having a number calling device and having an index card device of usual telephone numbers which comprises:

a covering plate (16) pivotally mounted on a platform (15) atop the telephone set (1) and being printed thereon with classification numbers or letters (161) relating to usual telephone numbers;

a card selecting hook (18) freely engaging within said covering plate;

a sliding button (17) which is movingly engaged within a horizontal plate (152) extended from and under said platform, said sliding button being formed with a horizontal plate (174) on its lower portion which has at one end a tongue extension (174a);

a printed circuit board (30) which includes contacts (31) of x-axis of a memory address (5) of telephone numbers being positioned under said tongue extension (174a) of said sliding button;

a plurality of index cards (2) having usual telephone numbers (22) printed thereon being laid on a card supporting plate (153) extended from said horizontal plate (152) extended from said platform;

several buttons (19) respectively positioned on both sides of the telephone numbers (22) printed on said index cards so that each button is aligned with a telephone number;

a further printing circuit board (32) which comprises contacts (320) of y-axis of said memory address being positioned under said buttons (19) beside said telephone numbers of said index cards, the contacts made on the x and y axis of the memory address initiating operation of the number calling device to call the selected number, means (4) for automatically re-initiating operation of the number calling device if the number called is not received and means (7, 8, 9, 81, 82) to cancel the automatic operation of the calling device once a call has been received.

2. A telephone set according to claim 1, characterised in that, said covering plate (16) is bent on its rear side to form a downward extension (163), two brackets (164) being extended from and under the bending portion of said covering plate for pivotedly supporting a horizontal shaft (165), two springs (166) being jacketed onto said shaft, one end of each said spring backing the bottom of said covering plate and the other ends of said springs being fixed on the bottom of said card supporting plate so that said springs may cause said covering plate to open upon depressing said sliding button and thereby releasing the pressure on said covering plate, two arch plates (167) being formed on both sides under said covering plate so as to engage with side cutting holes (21) of said index cards (2).

3. A telephone set according to Claim 1 or Claim 2, characterised in that said sliding button (17) comprises a surface plate (171), a vertical plate (173) with a hook (172a) connected to said surface plate and a horizontal plate (174) connected to said vertical plate (173) said horizontal plate having at one end a tongue extension (174a) and at the other end being extended in two arms (174b) each terminating with a shaft bracket (174c) for pivotedly supporting a horizontal shaft (175) therein;

a sliding plate (176) from which extend downwardly two arms (176b) each terminating in a shaft bracket (176c) for pivotedly surrounding the same shaft (175) as above-mentioned;

a spring (177) which is jacketed onto said shaft having one end backing said horizontal plate (174) of said sliding button and the other end fixed under said sliding plate (176) under said card supporting plate (153).

4. A telephone set according to Claim 3, characterised in that, said spring (177) between said sliding plate (176) and said horizontal plate (174) of said sliding button (17) acts by its one end to force said hook (172a) of said button (17) to engage with the edge of said covering plate (16) and acts by its other end to force said sliding plate (176) to back the bottom of said card supporting plate (153) so that said covering plate may be normally closed by the action of said spring (177) and may be opened by the action of another spring (166) in said covering plate (16) upon depressing said sliding button.

5. A telephone set according to Claim 3 or Claim 4, characterised in that, said sliding button is formed with a central line (171a) on its surface plate (171), said line being alignable with the classification of a telephone number (161) on said covering plate.

6. A telephone set according to any of Claims 1 to 5, characterised in that, said card selecting hook (18) comprises a surface plate (181), a vertical plate (182) extending under said surface plate, a middle hook plate (182a) connected with said vertical plate (182) and two legs (183) extending downwards from said hook plate.

7. A telephone set according to Claim 6, characterised in that, said surface plate (181) of said card selecting hook is formed with a central line (181a) which is alignable with the classification of a telephone number (161) on said covering plate.

8. A telephone set according to Claim 6 or Claim 7, characterised in that, said two legs (183) which extend from said selecting hook (18) are engaged with said horizontal plate (174) of said sliding button, whereby both selecting hook and sliding button may be moved simultaneously.

9. A telephone set according to any of Claims 1 to 8, characterised in that, said two printed circuit boards (30, 32) for x-axis and y-axis of memory address, said sliding button (17) and said buttons (19) beside said index cards form a memory address key board (3).

10. A telephone set according to any of Claims 1 to 9, characterised in that, each said index card (2) is cut with a transverse recess (2a), the length of the recess in successive cards being increased with respect to the classification order so that the recess length of an upper card is shorter than that of a lower card, whereby that lower card having the specific telephone number may remain in situ because the hook plate (182a) of said card selecting hook (18) may pass the transverse recess on the specific card and may raise the upper card or cards therefrom to reveal said specific card.

11. A telephone set according to any of Claims 1 to 10 and comprising a circuit having a telephone (1), a terminal of exchange line (6), a reed relay (7), a micro-computer (4), a memory part (5), a display (14), a number key board (121) and a memory address key board (3).

12. A telephone set of micro-process according to Claim 11, characterised in that, said circuit further comprises a photo coupler (8) which comprises a light emission diode (LED) (81) and a photo transistor (82) and a dummy load (9) to form a circuit able to cancel the order of automatic re-dial.

13. A telephone set according to Claim 12, characterised in that, said LED of said photo coupler (8) is connected in parallel with said dummy load (9) and is positioned after said reed relay (7) relative to the line terminal (6), said photo transistor (82) of said photo coupler being used to transmit a grounding signal to said micro-computer (4) when said LED is lit.

14. A telephone set according to Claim 12 or Claim 13, characterised in that, said circuit for cancelling the automatic re-dial is effected when the receiver receives the phone call and the polarity of the exchange line is alternated.

## Patentansprüche

1. Mehrzweck-Telefonapparat mit einer Nummern-Rufeinrichtung und einer, übliche Telefonnummern enthaltende, Karteikartenvorrichtung, bestehend aus:

einer Deckplatte (16), die schwenkbar an einer Plattform (15) auf der Oberseite eines Telefonapparats (1) befestigt ist und mit sich auf die üblichen Telefonnummern beziehende Klassifizierungsnummern oder -buchstaben (161) bedruckt ist;

ein Kartenwählhaken (18), der frei innerhalb der besagten Deckplatte eingreift;

einer Schiebetaste (17), die beweglich in eine horizontale Platte (152) eingreift, die sich von und unter der besagten Plattform erstreckt, wobei die besagte Schiebetaste in ihrem unteren Teil mit einer horizontalen Platte (174) ausgebildet ist, die an einem Ende eine Verlängerungszunge (174a) trägt;

einer gedruckten Schaltungsplatine (30) mit Kontakten (31), die der X-Achse der Speicheradresse (5) von Telefonnummern zugeordnet sind und sich unter der besagten Verlängerungszunge (174a) der besagten Schiebetaste befinden;

mehreren, mit darauf gedruckten üblichen Telefonnummern versehenen Karteikarten (2), die auf eine sich von der besagten horizontalen Platte (152) erstreckenden Kartenstützplatte (153) gelegt sind, wobei sich die horizontale Platte (152) von der besagten Plattform aus erstreckt;

mehreren derart auf beiden Seiten der auf besagten Karteikarten gedruckten Telefonnummern (22) angeordnet Tasten (19), daß jede dieser Tasten mit einer Telefonnummer ausgerichtet ist;

einer weiteren gedruckten Schaltungsplatine (32), die aus der Y-Achse der besagten Speicheradresse zugeordneten Kontakten (320) besteht, die sich unter den besagten Tasten (19) neben den besagten Telefonnummern der besagten Karteikarten befinden, wobei die auf den X- und Y-Achsen der Speicheradresse hergestellten Kontakte die Betätigung der Nummern-Rufeinrichtung zum Rufen der gewählten Nummer einleiten, Mitteln (4) zum automatischen Wiedereinleiten der Betätigung der Nummern-Rufeinrichtung, falls die gerufene Nummer nicht erreicht wird und Mitteln (7, 8, 9, 81, 82) zum Löschen der automatischen Betätigung der Rufeinrichtung, nachdem einmal ein Ruf empfangen wurde.

2. Telefonapparat nach Anspruch 1, dadurch gekennzeichnet, daß der rückwärtige Teil der Deckplatte (16) zum Bilden einer sich nach unten erstreckenden Verlängerung (163) abgebogen ist, zwei Bügel (164) sich von und unter dem abgebogenen Teil der besagten Deckplatte zum schwenkbaren Stützen einer horizontalen Welle (165) erstrecken, zwei Federn (166) auf die besagte Welle aufgeschoben sind, ein Ende jeder der besagten Federn an der Unterseite der besagten Deckplatte anliegt und die jeweils anderen Enden der besagten Federn an der Unterseite der besagten Kartenstützplatte befestigt sind, sodaß nach Drücken der besagten Schiebetaste und darauf folgendem Auslösen des auf die besagte Platte wirkenden Drucks, die besagten Federn das Öffnen der besagten Deckplatte bewirken, wobei auf beiden Seiten der besagten Deckplatte zwei Bogenplatten (167) derart gebildet sind, daß sie mit seitlichen Schneidöffnungen (21) der besagten Karteikarten (2) in Eingriff kommen.

3. Telefonapparat nach Anspruch 1 oder 2, dadurch gekennzeichnet, daß die besagte Schiebetaste aus einer Oberflächenplatte (171) sowie aus einer Vertikalplatte (173) mit einem Haken (172a), der mit der besagten Oberflächenplatte verbunden ist, und aus einer horizontalen Platte (174) besteht, die mit der Vertikalplatte (173) verbunden ist, wobei ein Ende der horizontalen Platte mit einer Verlängerunszunge (174a) versehen ist und am anderen Ende durch zwei Arme (174b) verlängert ist, von denen jeder mit einem Wellenbügel (174c) abschließt, deren jeder zum schwenkbaren Stützen einer Horizontalwelle (175) ausgebildet ist; mit einer Schiebeplatte (176), von der sich zwei Arme (176b) erstrecken, deren jeder, zum schwenkbaren Umfassen der gleichen, wie oben erwähnten Welle (175), mit einem Wellenbügel (176c) abschließt; eine auf besagte Welle aufgeschobene Feder (177), deren eines Ende an der Unterseite der besagten horizontalen Platte (174) der besagten Schiebetaste anliegt und deren anderes Ende unter der besagten Schiebeplatte (176) unter der besagten Kartenstützplatte (153) befestigt ist.

4. Telefonapparat nach Anspruch 3, dadurch gekennzeichnet, daß die zwischen besagter Schiebeplatte (176) und besagter horizontalen Platte (174) der besagten Schiebetaste (17) befindliche Feder (177) mit einem ihrer Enden den besagten Haken (172a) der besagten Taste (17) zwingt, mit der Kante der besagten Deckplatte (16) einzugreifen und mit dem jeweils anderen ihrer Enden die besagte Schiebeplatte (176) zwingt, an der Unterseite der besagten Kartenstützplatte (153) anzuliegen, sodaß die besagte Deckplatte normalerweise durch die Wirkung der besagten Feder (177) geschlossen werden kann und, nach Drücken der besagten Schiebetaste, durch die Wirkung einer anderen, in der Deckplatte (16) befindlichen, Feder (166) göffnet werden kann.

5. Telefonapparat nach Anspruch 3 oder 4, dadurch gekennzeichnet, daß die Schiebetaste mit einer Mittellinie (171a) auf ihrer Oberflächenplatte (171) ausgebildet ist, wobei die besagte Linie mit der Klassifizierung einer auf der besagten Deckplatte befindlichen Telefonnummer in Fluchtung gebracht werden kann.

6. Telefonapparat nach einem der Ansprüche 1 bis 5, dadurch gekennzeichnet, daß der besagte Kartenwählhaken (18) aus einer Oberflächenplatte (181), einer sich unter der besagten Oberflächenplatte erstreckenden Vertikalplatte (182), einer mit besagter Vertikalplatte verbundener mittleren Hakenplatte (182a) und aus zwei, sich von besagter Hakenplatte nach unten erstreckenden Schenkeln (183) besteht.

7. Telefonapparat nach Anspruch 6, dadurch gekennzeichnet, daß die besagte Oberflächenplatte (181) des besagten Kartenwählhakens mit einer Mittellinie (181a) ausgebildet ist, die mit der Klassifizierung einer auf besagter Deckplatte befindlichen Telefonnummer in Fluchtung gebracht werden kann.

8. Telefonapparat nach Anspruch 6 oder 7, dadurch gekennzeichnet, daß die beiden besagten, sich vom besagten Wählhaken (18) erstreckenden Schenkel (183) mit der besagten horizontalen Platte (174) der besagten Schiebetaste im Eingriff stehen, wodurch sowohl der Wählhaken wie auch die Schiebetaste gleichzeitig bewegbar sind.

9. Telefonapparat nach einem der Ansprüche 1 bis 8, dadurch gekennzeichnet, daß die beiden besagten gedruckten Schaltungsplatinen (30, 32) für die X- und Y-Achsen der Speicheradressen, die besagte Schiebetaste (17) und die besagten Tasten (19) neben den besagten Karteikarten eine Speicheradressen-Tastatur (3) bilden.

10. Telefonapparat nach einem der Ansprüche 1 bis 9, dadurch gekennzeichnet, daß in jede der besagten Karteikarten (2) eine querliegende Ausnehmung (2a) eingeschnitten ist, wobei sich die Länge der Ausnehmungen aufeinander folgender Karten mit Bezug auf die Klassifizierungs-Reihenfolge vergrößert, sodaß die Ausnehmungslänge einer oberen Karte kürzer als die einer unteren Karte ist und die mit der spezifischen Telefonnummer versehene Karte auf ihrem Platz bleiben kann, da die Hakenplatte (182a) des besagten Kartenwählhakens (18) an der quer liegenden Ausnehmung der spezifischen Karte vorbei gehen kann und die obere Karte bzw. oberen Karten davon zum Aufdecken der spezifischen Karte heben kann.

11. Telefonapparat nach einem der Ansprüche 1 bis 10, gekennzeichnet durch eine Schaltung mit einem Telefon (1), einen Amtsleitungsanschluß (6), ein Zungenrelais (7), einen Mikrocomputer (4), einen Speicherteil (5), eine Anzeige (14), eine Nummern-Tastatur (121) und eine Speicheradressen-Tastatur (3).

12. Telefon mit Mikroprozessor nach Anspruch 11, dadurch gekennzeichnet, daß die besagte Schaltung weiterhin einen aus Leuchtdiode (LED) (81), einem Fototransistor (82) und einer Blindbelastung (9) bestehendem Fotokoppler (8) enthält, der eine Schaltung bildet, die den automatischen Wiederwählbefehl löschen kann.

13. Telefonapparat nach Anspruch 12, dadurch gekennzeichnet, daß die besagte Leuchtdiode des besagten Fotokopplers (8) parallel an die besagte Blindbelastung (9) angeschlossen ist und mit Bezug auf den Leitungsanschluß (6) hinter dem besagten Zungenrelais (7) angeordnet ist, wobei der Fototransistor (82) des besagten Fotokopplers zum Übertragen eines Erdsignals zum besagten Mikrocomputer (4) verwendet wird, wenn die besagte Leuchtdiode leuchtet.

14. Telefonapparat nach Anspruch 12 oder 13, dadurch gekennzeichnet, daß die besagte Schaltung zum Löschen der Wiederwahlfunktion bei Empfang seitens des Empfängers eines Anrufs und bei Polaritätswechsel der Amtsleitung aktiviert wird.

**Revendications**

1. Appareil téléphonique polyvalent doté d'un dispositif d'appel de numéro et doté d'un dispositif de fiches de numéros de téléphone usuels qui comprend:

une plaque de couverture (16) montée de manière à pivoter sur une plateforme (15) au-dessus de l'appareil téléphonique (1) et portant en impression des numéros ou lettres de classement (161) se rapportant à des numéros de téléphone usuels;

un crochet de sélection de fiches (18) s'insérant librement à l'intérieur de ladite plaque de couverture; un bouton coulissant (17) qui s'engrène de façon mobile dans une plaque horizontale (152) qui s'étend à partir de, et sous ladite plateforme, ledit bouton coulissant étant constitué avec une plaque horizontale (174) sur sa partie inférieure qui a à une extrémité un prolongement en languette (174a);

un panneau de circuit imprimé (30) qui comprend des contacts (31) d'axe-x d'un registre d'adresses de la mémore (5) de numéros de téléphone mis en position sous ledit prolongement en languette (174a) dudit bouton coulissant;

une pluralité de fiches (2) portant en impression des numéros de téléphone usuels (22) appliqués sur une plaque de support de fiches (153) s'étendant de ladite plaque horizontale (152) s'étendant de ladite plateforme;

plusieurs boutons (19) respectivement situés des deux côtés des numéros de téléphone (22) imprimés sur lesdites fiches de sorte que chaque bouton soit aligné sur un numéro de téléphone;

un autre panneau de circuit imprimé (32) qui comprend des contacts (320) d'axe-y dudit registre d'adresses de la mémoire mis en position sous lesdits boutons (19) à côté desdits numéros de téléphone desdites fiches, les contacts effectués sur les axes x et y du registre d'adresses de mémoire commençant l'opération du dispositif d'appel de numéro pour appeler le numéro choisi, des moyens (4) pour recommencer automatiquement l'opération du dispositif d'appel de numéro si le numéro appelé n'est pas reçu et des moyens (7, 8, 9, 81, 82) pour annuler l'opération automatique du dispositif d'appel après réception d'un appel.

2. Appareil téléphonique selon la revendication 1, caractérisé en ce que ladite plaque de couverture (16) est recourbée sur son côté postérieur pour former un prolongement se dirigeant vers le bas (163), deux consoles (164) s'étendant à partir de, et sous la partie recourbée de ladite plaque de couverture pour soutenir de manière pivotante un arbre horizontal (165), deux ressorts (166) étant enveloppés sur ledit arbre, une extrémité de chacun desdits ressorts se trouvant au dos du bas de ladite plaque de couverture et les autres extrémités desdits ressorts étant fixées sur le bas de ladite plaque de support de fiches de sorte que lesdits ressorts puissent faire ladite plaque de couverture s'ouvrir lors de l'enfoncement dudit bouton coulissant et en relâchant de la sorte la pression sur ladite plaque de couverture, deux plaques arquées (167) étant formées des deux côtés sous ladite plaque de couverture de façon à s'insérer dans les trous de coupe latéraux (21) desdites fiches (2).

3. Appareil téléphonique selon la revendication 1 ou 2, caractérisé en ce que ledit bouton coulissant (17) comprend une plaque de surface (171), une plaque verticale (173) avec un crochet (172a) relié à ladite plaque de surface et une plaque horizontale (174) reliée à ladite plaque verticale (173), ladite plaque horizontale étant dotée à une extrémité d'un prolongement en languette (174a), et l'autre extrémité s'étendant en deux bras (174b), chacun de ces derniers se terminant en un arbre support (174c) pour soutenir de manière pivotante un arbre horizontal (175) à l'intérieur; une plaque coulissante (176) à partir de laquelle deux bras (176b) s'étendant vers le bas, chacun des deux bras se terminant en un arbre support (176c) pour entourer de manière pivotante le même arbre (175) que mentionné ci-dessus; un ressort (177) qui est enveloppé sur ledit arbre ayant une extrémité appuyant ladite plaque horizontale (174) dudit bouton coulissant et l'autre extrémité fixée sous ladite plaque coulissante (176) sous ladite plaque de support de fiches (153).

4. Appareil téléphonique selon la revendication 3, caractérisé en ce que ledit ressort (177) entre ladite plaque coulissante (176) et ladite plaque horizontale (174) dudit bouton coulissant (17) agit par une extrémité pour forcer ledit crochet (172a) dudit bouton (17) à s'emboîter sur le bord de ladite plaque de couverture (16), et agit par son autre extrémité pour forcer ladite plaque coulissante (176) à s'appuyer sur le fond da ladite plaque de support de fiches (153) de sorte que ladite plaque de couverture puisse être normalement fermée par l'action dudit ressort (177) et puisse être ouverte par l'action d'un autre ressort (166) dans ladite plaque de couverture (16) lors de l'enfoncement dudit bouton coulissant.

5. Appareil téléphonique selon la revendication 3 ou la revendication 4, caractérisé en ce que ledit bouton coulissant est constitué avec une ligne médiane (171a) sur sa plaque de surface (171), ladite ligne pouvant être alignée sur le classement d'un numéro de téléphone (161) sur ladite plaque de couverture.

6. Appareil téléphonique selon l'une ou l'autre des revendications 1 à 5, caractérisé en ce que ledit crochet de sélection de fiche (18) comprend une plaque de surface (181), une plaque verticale (182) s'étendant sous ladite plaque de surface, une plaque crochet centrale (182a) reliée à ladite plaque verticale (182) et deux pattes (183) s'étendant de ladite plaque crochet vers le bas.

7. Appareil téléphonique selon la revendication 6, caractérisé en ce que ladite plaque de surface (181) dudit crochet de sélection de fiches est constituée avec une ligne médiane (181a) qui peut s'aligner sur le classement d'un numéro de téléphone (161) sur ladite plaque de couverture.

8. Appareil téléphonique selon la revendication 6 ou la revendication 7, caractérisé en ce que lesdites deux pattes (183) qui s'étendent dudit crochet de sélection (18) s'emboîtent sur ladite plaque horizontale (174) dudit bouton coulissant, en conséquence de quoi tant le crochet de sélection que le bouton coulissant peuvent être déplacés simultanément.

9. Appareil téléphonique selon l'une ou l'autre des revendications 1 à 8, caractérisé en ce que lesdits deux panneaux de circuits imprimés (30, 32) pour l'axe x et l'axe y du registre d'adresse de mémoire, ledit bouton coulissant (17) et lesdits boutons (19) à côté desdites fiches constituent un clavier d'adresse de mémoire (3).

10. Appareil téléphonique selon l'une ou l'autre des revendications 1 à 9, caractérisé en ce que chaque fiche (2) est dotée d'un évidement transversal (2a) qui y est découpé, la longueur de l'évidement dans les fiches successives allant en augmentant par rapport à l'ordre de classement de sorte que la longueur d'évidement d'une carte supérieure soit plus courte que celle d'une carte inférieure, en conséquence de quoi la carte inférieure ayant le numéro de téléphone intéresse peut rester en place parce que la plaque à crochet (182a) dudit crochet de sélection de fiche (18) peut passer l'évidement transversal sur la fiche intéressée et peut soulever à partir de ladite carte la ou les cartes supérieures pour révéler ladite carte intéressée.

11. Appareil téléphonique selon l'une ou l'autre des revendications 1 à 10 et comprenant une circuit ayant un téléphone (1), une extrémité de ligne de central téléphonique (6), un relais à anche (7), un micro-ordinateur (4), un élément mémoire (5), un affichage (14), un clavier à numéros (121) et un clavier (3) adresse de mémoire.

12. Appareil téléphonique à micro-traitement selon la revendication 11, caractérisé en ce que ledit circuit comprend en outre un photocoupleur (8) qui comprend une diode d'émission de lumière (81) (LED) et un phototransistor (82) et une charge fictive (9) pour constituer un circuit en mesure d'annuler l'ordre de recomposition automatique du numéro.

13. Appareil téléphonique selon la revendication 12, caractérisé en ce que ladite diode d'émission de lumière dudit photocoupleur (8) est reliée en parallèle avec ladite charge fictive (9) et est placée après le dit relais à anche (7) par rapport à l'extrémité de ligne (6), ledit photo-transistor (82) dudit photocoupleur étant utilisé pour transmettre un signal de mise à la terre audit micro-ordinateur (4) lorsque ladite diode d'émission de lumière est illuminée.

14. Appareil téléphonique selon la revendication 12 ou la revendication 13, caractérisé en ce que ledit circuit d'annulement de recomposition automatique du numéro s'effectue lorsque le récepteur reçoit l'appel téléphonique et la polarité de la ligne du central est alternée.

FIG 1

0 025 254

FIG 2

FIG 3

0 025 254

FIG 4

FIG 5

FIG 6

FIG 7

FIG 8

0 025 254